# EUROPEAN PATENT SPECIFICATION

(11) **EP 2 578 879 B1**
(45) Date of publication and mention of the grant of the patent: **01.10.2014**
(21) Application number: 11183808.2
(22) Date of filing: 04.10.2011
(51) Int. Cl.: F03D 11/00

(54) **Cooling arrangement for a wind turbine**
Kühlanordnung für eine Windturbine
Agencement de refroidissement pour une éolienne

(43) Date of publication of application: 10.04.2013
(73) Proprietor: Siemens Aktiengesellschaft, 80333 München (DE)
(72) Inventor: Hartkopf, Rune, 7330 Brande (DK)

(56) References cited:
- EP-A2- 2 007 184
- US-A1- 2010 034 653
- US-A1- 2010 138 182
- US-A1- 2011 095 539

## Description

### Field of invention

The present invention relates to an arrangement for cooling a component of a wind turbine, to a wind turbine comprising the cooling arrangement and to a wind park comprising the wind turbine.

### Art Background

A number of wind turbines may be connected to a point of common coupling (PCC) which may be connected, in particular via a wind park transformer, to a utility grid providing electric energy to a plurality of consumers. At the point of common coupling particular electrical conditions may be required, in particular regarding voltage, active power and/or reactive power. In particular, there may be particular requirements regarding to the reactive power at the point of common coupling.

Each of the plurality of wind turbines may comprise a converter for converting a variable frequency AC-voltage to a DC-voltage or to a fixed frequency AC-voltage which may be provided at the point of common coupling, in particular via a wind turbine transformer. The converter may have the capability to modify the reactive power at the point of common coupling. In particular, the converter may act as a coil to reduce the reactive power at the point of common coupling.

It has however been observed that cooling the converter may be difficult in particular situations.

There may be a need for an arrangement for cooling a component of a wind turbine and for a wind turbine and further for a wind park, wherein cooling in particular of a converter is improved, in,particular at particular environmental conditions.

Document US 2010/0034653 A1 discloses a wind turbine including a first temperature control system and a mechanism for exchanging heat between the first temperature control system and at least one further temperature control system of the wind turbine, wherein a temperature control mechanism enables the heat exchange between the first temperature control system and the at least one further temperature control system.

### Summary of the Invention

This need may be met by the subject matter according to the independent claims. Advantageous embodiments of the present invention are described by the dependent claims.

According to an embodiment of the present invention, an arrangement for cooling (in particular for reducing a temperature by extracting thermal energy) a first component (in particular a component which needs cooling, in particular under certain operating conditions, wherein the first component may in particular be an electronic component comprising power electronics or may comprise mechanical components, in particular for rotatably supporting another component) of a wind turbine (in particular comprising a wind turbine tower, a nacelle mounted on top of the tower, a rotor shaft rotatably supported within the nacelle, the rotor shaft having one or more wind turbine blades connected, wherein the rotation shaft rotates upon impact of wind onto the rotor blades, wherein the rotor is mechanically connected to a generator for generating electric energy from the rotating rotor shaft, wherein the electric energy may be generated in the form of a variable frequency AC-voltage which may then be supplied to an electric converter for converting the variable frequency AC-voltage to a DC-voltage or to a fixed frequency AC-voltage) is provided. Thereby, the arrangement comprises a second component (which may have under certain operation conditions a temperature below the temperature of the first component such that the second component may act as a heat sink for cooling the first component, wherein the second component at another operating condition may also require cooling, wherein the second component in particular has a higher heat capacity than the first component) of the wind turbine; a piping system (in particular comprising one or more piping sections being adapted to carry or guide or lead the cooling liquid); a heat exchanger (comprising a heat exchanger surface for exchanging thermal energy with the environment, wherein the cooling liquid may be led through the heat exchanger in thermal contact with the heat exchange surface); and a cooling liquid (in particular comprising water) carried (or led or guided or contained) within the piping system. Further, the arrangement is adapted, in an operation mode (in particular in a situation, when there is low wind speed, such that the wind turbine does not produce electric energy, in particular does not produce active electric energy or active power towards the point of common coupling to which the turbine may be connected together with a plurality of other wind turbines), to guide the cooling liquid along a cooling loop (in particular in a circulation or a circuit, such that the cooling liquid is led away from a particular location within the cooling loop, is guided or carried along the cooling loop and is returned to the particular location within the cooling loop, wherein the cooling loop may have any shape, such as an oval shape, a circular shape or an irregular shape comprising one or more straight sections and/or one or more curved sections which are arranged subsequently behind each other) such that the cooling liquid is in thermal contact (for exchanging thermal energy) with the first component and the second component for exchanging thermal energy between the first component and the second component (in particular for transferring thermal energy from the first component to the second component, such that a heat flow is directed from the first component to the second component). Further, the arrangement is adapted, in another operation mode (in particular in a normal operation mode, where the wind turbine produces electric energy and supplies the electric energy, in particular active power, to the point of common coupling, wherein in particular the wind speed is above a wind speed threshold, such that the rotor shaft rotates within the generator comprised in the wind turbine), to guide the cooling liquid along another cooling loop (also providing a circulation of cooling liquid along a path having any shape) such that the cooling liquid is in thermal contact with the second component and the heat exchanger for exchanging thermal energy between the second component and the heat exchanger (in particular such that thermal energy is transferred from the second component to the heat exchanger for cooling the second component which is used during the operation mode for cooling the first component of the wind turbine). Further, the arrangement is adapted, in the other operation mode, to guide the cooling liquid along a further other cooling loop such that the cooling liquid is in thermal contact with the first component (101) and the heat exchanger for exchanging thermal energy between the first component and the heat exchanger.

Thereby, in particular, in the operation mode the first component may require cooling and the second component may not require cooling, wherein cooling the first component may be achieved by transferring thermal energy contained in the first component to the second component which in the operation mode may not require cooling.

In the other operation mode the second component may require cooling and the first component may not be cooled by transferring thermal energy from the first component to the second component. Instead, also the first component may be cooled by transferring thermal energy of the first component to the heat exchanger.

In particular, in the operation mode, the heat exchanger may not provide extensive cooling capabilities, since in the operation mode the wind speed may be very low such that heat transferred to the heat exchanger may not be transferred efficiently to the environment. In particular, in situations where cooling of the first component by using the heat exchanger is not efficient, cooling of the first component by transferring thermal energy from the first component to the second component may be effectively be achieved. Thereby, cooling the first component of the wind turbine, in particular under low wind conditions, may be improved. Further, a capacity of the heat exchanger may be designed to be moderate. Thereby, the arrangement may be simplified and reduced in costs.

According to an embodiment of the present invention, in the operation mode, the first component is arranged within the cooling loop, along a flow direction of the cooling liquid (flowing along the cooling loop, in particular by actuating one or more pumps arranged at one or more positions along the cooling loop or within the piping system), downstream of the second component. Thus, according to this embodiment the cooling liquid is first in thermal contact with the second component of the wind turbine which may therefore effectively cool down the cooling liquid (by transferring thermal energy from the cooling liquid to the second component) and may then be guided (optionally via one or more other components) to the first component such that the cooling liquid (cooled down by the second component) may receive thermal energy from the first component for effectively cooling the first component. Thereby, a cooling rate (or a thermal energy stream, in particular a change of temperature of the first component with respect to time) may be increased for fast cooling of the first component.

According to an embodiment of the present invention, the arrangement is adapted, in the other operation mode, to guide the cooling liquid along a further other cooling loop (also providing a circulation of the cooling liquid) such that the cooling liquid is in thermal contact with the first component and the heat exchanger for exchanging thermal energy between the first component and the heat exchanger (in particular for transferring thermal energy from the first component to the heat exchanger and from there to the environment). Thereby, in particular, the first component may be arranged, along the further other cooling loop, downstream of the heat exchanger for more effectively cooling the first component in the other operation mode, which may be in particular a normal operation mode of the wind turbine.

Thereby, the first component may be also effectively cooled in the other operation mode in which also the second component may require cooling.

According to an embodiment of the present invention, in the other operation mode, the first component and/or the second component is arranged downstream of the heat exchanger along another flow direction of the cooling liquid. Thereby, a cooling rate or heat transfer rate from the first component to the heat exchanger and/or from the second component to the heat exchanger may be increased for more effectively cooling of the first component and/or the second component in the other operation mode.

According to an embodiment of the present invention, a third component (of the wind turbine) is arranged within the cooling loop and/or the other cooling loop and/or the further other cooling loop. In particular, one or more components (which may also require cooling and/or heating under particular running operations) may be arranged within the cooling loop and/or the other cooling loop and/or the further other cooling loop. Thus, the first component and the second component need not to be directly adjacent to each other in the cooling loop. Further, the heat exchanger and the first component need not to be directly adjacent in the further other cooling loop and also the second component and the heat exchanger do not need to be directly adjacent to each other in the other cooling loop. Thereby, also other components of the wind turbine which may require cooling and/or heating under certain operation conditions may be cooled and/or heated. Thereby, a number of cooling loops may be reduced for simplifying the cooling arrangement and reducing the costs of the cooling arrangement.

According to an embodiment of the present invention, the piping system comprises a third pipe (in particular comprising a number of pipe sections which may comprise straight portions and/or curved portions) connecting the first component with the second component (wherein the third pipe is adapted to carry or lead the cooling liquid from the first component to the second component and/or from the second component to the first component), wherein the cooling loop comprises the third pipe. Thereby, the third pipe may be used for carrying the cooling liquid during the operation mode to cool the first component by transferring thermal energy from the first component to the cooling liquid, and then from the cooling liquid to the second component and finally from there to the environment.

In particular, the piping system comprises a first pipe connecting the first component with the heat exchanger; a second pipe connecting the second component with the heat exchanger; another first pipe connecting the first component with the heat exchanger, another second pipe connecting the second component with the heat exchanger; wherein the other cooling loop comprises the second pipe and/or the further second pipe, wherein the further other cooling loop comprises the first pipe and/or the further first pipe.

Within the first pipe the cooling liquid may in particular flow from the heat exchanger to the first component. In the other first pipe the cooling liquid may in particular flow from the first component to the heat exchanger. In the second pipe the cooling liquid may in particular flow along a direction from the heat exchanger to the second component. In the other second pipe the cooling liquid may in particular flow in a direction from the second component to the heat exchanger. Thereby, the other cooling loop and/or the further other cooling loop may be constructed or generated in a very simple manner.

Thereby, in particular the first pipe may comprise a pump for pumping the cooling liquid through the first pipe and further trough the other first pipe, when the cooling liquid is guided or carried within the further other cooling loop. Further in particular, the second pipe (or the other second pipe) may comprise a pump for pumping the cooling fluid through the second pipe and/or through the other second pipe.

Thereby, a circular flow of the cooling liquid along the cooling loop, along the other cooling loop or along the further other cooling loop may be achieved using the different pipes.

According to an embodiment of the present invention, the piping system further comprises a third valve in the third pipe (wherein the valve may control a flow rate of the cooling liquid within the third pipe, wherein the third valve may be opened or closed or may be opened or closed in a continuous manner to allow adjustment of a particular opening degree or a particular closing degree for adjusting a desired flow rate).

In particular, the piping system further comprises a first valve in the first pipe and/or in the other first pipe, and a second valve in the second pipe and/or in the other second pipe. The third valve, the first valve and/or the second valve may be controlled (in particular switched regarding their opening state and/or closing state) in order to form the cooling loop, the other cooling loop and/or the further other cooling loop in the operation mode and in the other operation mode.

In particular, when the first valve is arranged in the other first pipe, when the second valve is arranged in the second pipe and the third valve is arranged in the third pipe, the operation mode may be achieved by opening the first valve, opening the second valve and closing the third valve. Further, the other operation mode may be achieved or reached by closing the first valve, closing the second valve and opening the third valve. Thereby, in particular, a first pump may be arranged in the first pipe and a second pump may be arranged in the second pipe in order to allow flow of cooling liquid from the heat exchanger towards the first component and to allow flow of cooling liquid from the heat exchanger towards the second component.

According to other embodiments, the valves may be arranged at different locations within the piping system and also the pumps may be arranged at different positions within the piping system.

According to an embodiment of the present invention, the arrangement further comprises a control system (in particular comprising a processing unit, such as an arithmetic/logic unit, in particular a semiconductor comprising processor), which is adapted to open the first valve, to open the second valve and to close the third valve in the operation mode, and which is adapted to close the first valve, to close the second valve and to open the third valve in the other operation mode. Thereby, cooling of the first component in the operation mode and cooling the first component in the other operation mode and also cooling the second component in the other operation mode may be effectively achieved.

According to an embodiment of the present invention, the control system is adapted to adopt the operation mode, when a wind speed is below a wind speed threshold (which may be predetermined, wherein in particular the wind speed may be measured) and in particular when a temperature of the first component is above an upper temperature threshold. In particular, during such a low wind condition, the heat exchanger may not be efficient to be used for cooling components of the wind turbine, since a heat exchange rate for exchanging thermal energy from the heat exchanger to the environment may be too low. In this situation, it may be advantageous to provide a possibility to nevertheless cool the first component by transferring the thermal energy from the first component to the second component. Thereby, the first component may be effectively cooled also under this low wind condition. According to an embodiment of the present invention, the control system is further adapted, to adopt the other operation mode, when the wind speed is above the wind speed threshold (or above another wind speed threshold which may be higher than the wind speed threshold). When the wind speed is above the wind speed threshold, a high wind situation may be present. In this high wind situation, the thermal energy transfer rate from the heat exchanger to the environment may be high enough in order to cool the first component by heat exchange between the first component to the cooling liquid and from the cooling liquid to the heat exchanger and finally from the heat exchanger to the environment. In particular, during the high wind situation also the second component may need cooling, because the second component may be involved in the (thermal energy producing, as a side effect) energy production of the wind turbine, wherein the energy production may be realized during the high wind situation.

According to an embodiment of the present invention, the arrangement further comprises a heating element (for generating thermal energy, in particular from electrical energy) in thermal contact with the cooling liquid in the other cooling loop and/or in the cooling loop, wherein the arrangement is adapted to cause the heating element to heat the cooling liquid, if a temperature of the first component and/or the second component is below a lower temperature threshold.

In particular, the first component may require a minimal temperature in order to operate properly. Thus, under certain conditions, such as low external temperature, the first component may need heating in order to operate correctly and properly. Thereby, transferring thermal energy towards the first component may be achieved by leading appropriately tempered cooling liquid (tempered by the heating element) towards the first component, using the other cooling loop and/or the cooling loop. Thereby, depending on the operation condition and/or external condition the other cooling loop and/or the cooling loop may either be used for cooling the first component and/or the second component or for heating the first component and/or the second component. Thereby, extra equipment may be avoided for simplifying the arrangement and reducing the costs of the arrangement.

According to an embodiment of the present invention, the first component has a lower heat capacity than the second component. Thus, the second component may be capable to store more thermal energy than the first component. In turn, the second component may receive all thermal energy stored in the first component without reaching the limit of the second component as defined by the heat capacity of the second component. Thereby, cooling capability of the second component may be high enough to effectively cool the first component.

In particular, the first component has a lower mass than the second component, wherein in particular the second component has a mass between 10,000 kg and 300,000 kg. In particular, the second component may have a mass between 10 times and 100 times of the mass of the first component. Thereby, a cooling efficiency for cooling the first component by the second component may be improved or a cooling process may be accelerated.

According to an embodiment of the present invention, the first component comprises an electrical converter (in particular for converting a variable frequency AC-voltage to a DC-voltage or for converting a variable frequency AC-voltage to a fixed frequency AC-voltage), and/or hydraulic oil, and/or a bearing (in particular rotatably supporting a component of the wind turbine relative to another component of the wind turbine, in particular for rotatably supporting the rotor shaft within the nacelle), wherein in particular the second component comprises a generator (for generating electric energy upon rotation of the rotor shaft which is inductively coupled to one or more coils within a stator portion of the generator).

In particular, the electrical converter may be operated in the above-mentioned or defined low wind situation, in order to keep the reactive power at the point of common coupling at a predetermined value, such as at around zero. Due to this operation of the converter (in particular comprising switching of power electronic components, such as isolated gate bipolar transistors (IGBT)) the converter may produce as a side effect thermal energy causing the converter to increase its temperature. However, the converter may have a maximal temperature above which an operation of the converter may be required to be avoided because of malfunction of the converter or potential damage or risk of damage of components of the converter. Thus, in particular an electrical converter of a wind turbine may require cooling during a low wind situation.

According to an embodiment of the present invention, a wind turbine is provided, which comprises an arrangement for cooling a first component of a wind turbine, as is explained according to an embodiment described above. Thereby, a reliable operation of the wind turbine also at a low wind situation may be achieved.

According to an embodiment of the present invention, a wind park comprising a wind turbine as described above and a controller is provided, wherein the wind park in particular comprises a number of wind turbines. Thereby, the controller is adapted to reduce a thermal energy producing operation of the first component (in particular a converter, being operated to reduce a reactive power at the point of common coupling) of the wind turbine depending on a temperature of the first component of the wind turbine.

In particular, the controller may be adapted to switch on one or more converters of the wind park, in order to achieve a particular electrical condition at the point of common coupling, such as zero reactive power. Converters of other wind turbines comprised in the same wind park may be idle, in the low wind situation. When the temperature of the first component (in particular the converter) being operated in order to keep the reactive power at the point of common coupling at zero is above a temperature threshold, the controller may sense (or be communicated) the increased temperature and may switch off the operation of this converter and may switch on an operation of another converter of another wind turbine, in order to keep the reactive power at the point of common coupling at zero or in order to achieve particular predetermined electrical properties at the point of common coupling.

In particular, the temperature of the first component may rise above a temperature limit, if a thermal energy stored in the second component of the wind turbine approaches the heat capacity of the second component such that the second component is not able anymore to cool the first component. Thereby, a proper operation of the first component and the whole wind turbine may be ensured, while at the same time predetermined electrical requirements at the point of common coupling may be met.

It should be understood that features (individually or in any combination) disclosed, described, explained or mentioned with respect to an arrangement for cooling a first component of a wind turbine may also be applied, used for or employed for a method for cooling a first component of a wind turbine according to an embodiment and vice versa.

According to an embodiment of the present invention, a method for cooling a first component of a wind turbine is provided, wherein the method comprises carrying a cooling liquid within a piping system, wherein, in an operation mode, the cooling liquid is guided along a cooling loop such that the cooling liquid is in thermal contact with the first component and a second component (of the wind turbine) for exchanging thermal energy between the first component and the second component, wherein, in another operation mode, the cooling liquid is guided along another cooling loop such that the cooling liquid is in thermal contact with the second component and a heat exchanger (in thermal contact with an environment) for exchanging thermal energy between the second component and the heat exchanger.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

The present invention is now described with reference to the accompanying drawings. The invention is not restricted to the illustrated or described embodiments. Reference signs in the claims are not to be understood to limit the scope of the present invention.

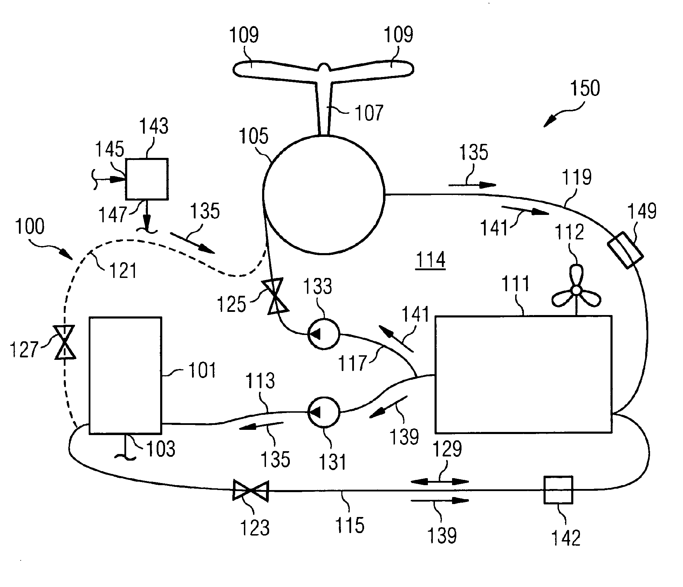

The Figure schematically illustrates a wind turbine according to an embodiment of the present invention comprising an arrangement for cooling a component of the wind turbine according to an embodiment of the present invention.

### Detailed Description

The illustration in the drawings is in schematic form.

The wind turbine 150 illustrated in the figure comprises an arrangement 100 for cooling a first component 101 of the wind turbine 150.

The first component 101 is here a converter for converting a variable frequency AC-voltage to a fixed frequency AC-voltage which is to be provided via an output terminal 103 to a not illustrated point of common coupling to which a plurality of wind turbines, such as wind turbines 150, are connected.

The arrangement 100 for cooling a first component 101 (also referred to as cooling arrangement 100) comprises a second component 105 which in the illustrated example comprises a generator of the wind turbine 150 which is inductively coupled to a rotation shaft 107 to which one or more rotor blades 109 are connected. The wind turbine 150 also comprises not illustrated bearings for rotatably supporting the rotation shaft 107 within an also not illustrated nacelle of the wind turbine 150.

The cooling arrangement 100 further comprises a heat exchanger 111 (also referred to as passive cooler) which comprises a heat exchange surface in thermal contact with an environment of the wind turbine 150 and also of the cooling arrangement 100. The heat exchanger is adapted to exchange via its heat exchange surface thermal energy with the environment.

The cooling arrangement 100 further comprises heat exchanger 111 and a piping system connecting the heat exchanger 111 with the first component 101 via a first pipe 113, connecting the first component 101 with the heat exchanger 111 via another first pipe 115, connecting the heat exchanger 111 with the second component 105 via a second pipe 117, connecting the second component 105 with the heat exchanger 111 via another second pipe 119 and connecting the first component 101 to the second component 105 via a third pipe 121.

Further, the piping system comprises a first valve 123 arranged within the other first pipe 115, a second valve 125 arranged within the second pipe 117 and a third valve 127 arranged in the third pipe 121. The first pipe, the other first pipe, the second pipe, the other second pipe and the third pipe (113, 115, 117, 119, 121) are adapted to carry and/or guide a cooling liquid which is indicated by double arrow 129 indicating possible flow directions of the cooling liquid within the different pipes 113, 115, 117, 119, 121 of the cooling arrangement 100. The cooling liquid in particular comprises water.

For conveying the cooling liquid 129 the cooling arrangement 100 further comprises a first pump 131 arranged in the first pipe 113 and a second pump 133 arranged within the second pipe 117.

The cooling arrangement 100 illustrated in the figure is adapted to be operated in an operation mode during a low wind situation and to be operated in another operation mode during a normal wind situation or a high wind situation.

In the operation mode the first component 101 which is represented by a converter is operated in order to achieve a zero reactive power at a point of common coupling to which the output terminal 103 of the converter 101 is connected. Due to this operation the converter 101 produces thermal energy which causes the temperature of the converter 101 to rise. Therefore, the converter 101 requires cooling for proper operation.

For this purpose, the cooling arrangement 100 is adapted, in the operation mode (in which the wind speed is not high enough to effectively cool the heat exchanger 111), to guide the cooling liquid (as indicated by double arrow 129) along a cooling loop 135, wherein the cooling liquid is guided from the heat exchanger 111 via the first pump 131 within the first pipe 113 to the first component 101, from where the cooling liquid is guided via the opened third valve 127 along the third pipe 121 to the second component 105, from which the cooling liquid is guided via the other second pipe 119 back to the heat exchanger 111. Thus, thermal energy transferred from the first component 101 to the cooling liquid 129 guided along the cooling loop 135 is transferred from the cooling liquid to the second component 105 and also to the heat exchanger 111.

According to alternative embodiments, the cooling loop 135 does not need to comprise the heat exchanger 111 but may only comprise the first component 101 and the second component, wherein only the second component 105 effectively cools the first component 101. A further valve may for example be provided within the other second pipe 119, wherein this valve may be closed. Further, the second valve 125 may be opened in order to allow a circular flow of the cooling liquid from the second component 105 via the second pipe 117, via the first pipe 113 to the first component 101 and from the first component via the third pipe 121 to the second component 105.

During the operation mode the first valve 123 is closed, the second valve 125 is closed and the third valve 127 is open, as can also be obtained from the following Table.

**Table:**

| | **Other operation mode (normal wind)** | **Operation mode (low wind)** |
|---|---|---|
| First Valve 123 | Open | Closed |
| Third Valve 127 | Closed | Open |
| Second Valve 125 | Open | Closed |
| First Pump | Running | Running |
| Second Pump | Running | Stopped |

In particular, the operation mode is adopted if the wind speed is below a wind speed threshold.

In the other operation mode, in particular representing a normal operation mode, when the wind turbine 150 produces electric energy and the wind speed is above a wind speed threshold, the first valve 123 is open, the second valve 125 is open and the third valve 127 is closed.

Therefore, another cooling loop 139 is formed connecting the heat exchanger 111 via the first pipe 113 with the first component 101 and connecting the first component 101 via the other first pipe 115 to the heat exchanger 111, in order to cool the first component 101 also during the other operation mode. Further, a further other cooling loop 141 is formed by connecting the heat exchanger 111 via the second pipe 117 to the second component 105 which in turn is connected via the other second pipe 119 to the heat exchanger 111. Thereby, also cooling of the second component 105 using the heat exchanger 111 is enabled during the other operation mode.

For switching between the different operation modes the cooling arrangement 100 further comprises a controller 143 which has an input terminal 145 for receiving external data, such as wind speed, temperature, operational conditions of the wind turbine and the like. The controller is adapted to control the first valve 123, the second valve 125 and the third valve 127 in order to adopt the operation mode (during low wind situations) or the other operation mode (in particular during normal wind speed). The controller 143 controls the valves via control signals supplied using the output terminal 147.

In particular, during no wind or low wind, the converter 101 and the generator 105 are connected via the cooling loop 135 so that the cooling liquid 129 from the converter 101 circling along the third pipe 121 is guided to the generator 105 whereupon the generator is heated by the waste heat from the converter 101. In particular, the generator represents a mass of 50 tons to 300 tons and may represent an outer surface of approximately 40 m². The overall cooling capacity of the cooling arrangement 100 may be expanded by circling the cooling liquid also across and through the heat exchanger 111.

If the temperature of the cooling liquid reaches a very high value, a (not illustrated) park pilot may switch operation of the converter 101 off and may instead switch an operation of a converter of another turbine on, in order to maintain approximately zero reactive power at the point of common coupling. If heating of the generator 105 and also the converter is needed (in particular during cold weather seasons) the park pilot may ensure that all turbines get to deliver reactive power so that the temperature is kept without electrical heating.

According to an embodiment of the present invention, the cooling arrangement 100 comprises a heating element 142 for heating for example the converter 101 during a cold season for example. The heating element 142 may be arranged at any position within the cooling arrangement 100, wherever required or needed.

The heat exchanger 111 may in particular comprise or may be connected to a fan 112 for increasing convection of environmental air through a heat exchange surface of the heat exchanger 111. In particular, during a low wind situation, i.e. during the operation mode the fan 112 may be switched off in order to avoid noise.

At any position in the cooling loop 135, the further cooling loop 139 and/or the other further cooling loop 141 a further component 149 of the wind turbine could be placed or not.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (100) for cooling a first component (101) of a wind turbine (150), the arrangement comprising:
- a second component (105) of the wind turbine;
- a piping system (113, 115, 117, 119, 121);
- a heat exchanger (111, 112) in thermal contact with an environment (114); and
- a cooling liquid (129) carried within the piping system,
wherein the arrangement is adapted, in an operation mode, to guide the cooling liquid along a cooling loop (135) such that the cooling liquid (129) is in thermal contact with the first component (101) and the second component (105) for exchanging thermal energy between the first component and the second component,
wherein the arrangement is adapted, in another operation mode, to guide the cooling liquid along another cooling loop (141) such that the cooling liquid is in thermal contact with the second component (105) and the heat exchanger (111, 112) for exchanging thermal energy between the second component and the heat exchanger,
wherein the arrangement is adapted, in the other operation mode, to guide the cooling liquid along a further other cooling loop (139) such that the cooling liquid is in thermal contact with the first component (101) and the heat exchanger (111, 112) for exchanging thermal energy between the first component and the heat exchanger.

2. Arrangement according to claim 1, wherein, in the operation mode, the first component is arranged within the cooling loop, along a flow direction (135) of the coolant liquid, in particular immediately, downstream of the second component.

3. Arrangement according to one of the preceding claims, wherein, in the other operation mode, the first component (101) and/or the second component (105) is arranged downstream of the heat exchanger along another flow direction (139, 141) of the cooling liquid.

4. Arrangement according to one of the preceding claims, wherein a third component (149) is arranged within the cooling loop (135) and/or the other cooling loop (141) and/or the further other cooling loop (139).

5. Arrangement according to one of the preceding claims, wherein the piping system comprises:
a third pipe (121) connecting the first component with the second component,
wherein the cooling loop (135) comprises the third pipe, wherein the piping system in particular comprises:
a first pipe (113) connecting the first component with the heat exchanger;
a second pipe (125) connecting the second component with the heat exchanger;
another first pipe (115) connecting the first component with the heat exchanger;
another second pipe (119) connecting the second component with the heat exchanger;
wherein the other cooling loop (141) comprises the second pipe (117) and/or the further second pipe (119),
wherein the further other cooling loop (139) comprises the first pipe (113) and/or the further first pipe (115).

6. Arrangement according to claim 5, wherein the piping system further comprises:
a third valve (127) in the third pipe (121),
wherein the piping system in particular further comprises:
a first valve (123) in the first pipe (113) and/or in the other first pipe (115);
a second valve (125) in the second pipe (117) and/or in the other second pipe (119).

7. Arrangement according to claim 6, further comprising
a control system (143) adapted to open the first valve (123), to open the second valve (125) and to close the third valve (127) in the other operation mode, and
to close the first valve (123), to close the second valve (125) and to open the third valve (127) in the operation mode.

8. Arrangement according to claim 7, wherein the control system (143) is adapted to adopt the operation mode, when a wind speed is below a wind speed threshold and in particular when a temperature of the first component is above an upper temperature threshold.

9. Arrangement according to claim 8, wherein the control system is adapted to adopt the other operation mode, when the wind speed is above the wind speed threshold.

10. Arrangement according to one of the preceding claims, further comprising:
a heating element (142) in thermal contact with the cooling liquid in the other cooling loop and/or in the cooling loop,
wherein the arrangement is adapted to cause the heating element to heat the cooling liquid, if a temperature of the first component is below a lower temperature threshold.

11. Arrangement according to one of the preceding claims, wherein the first component (101) has a lower heat capacity than the second component (105), wherein in particular the first component has a lower mass than the second component, wherein in particular the second component has a mass between 10,000 kg and 300,000 kg.

12. Arrangement according to one of the preceding claims, wherein the first component comprises an electrical converter (101), and/or hydraulic oil, and/or a bearing, and wherein in particular the second component comprises a generator (105).

13. Wind turbine (150), comprising an arrangement (100) according to one of the preceding claims.

14. Wind park, comprising
a wind turbine according to claim T3 ; and
a controller which is adapted to reduce a thermal energy producing operation of the first component of the wind turbine depending on a temperature of the first component of the wind turbine.

## Patentansprüche

1. Anordnung (100) zum Kühlen einer ersten Komponente (101) einer Windturbine (150), wobei die Anordnung umfasst:
- eine zweite Komponente (105) der Windturbine;
- ein Rohrleitungssystem (113, 115, 117, 119, 121);
- einen Wärmetauscher (111, 112), der sich in thermischem Kontakt mit einer Umgebung (114) befindet; und
- eine Kühlflüssigkeit (129), die innerhalb des Rohrleitungssystems transportiert wird,
wobei die Anordnung dazu eingerichtet ist, in einer Betriebsart die Kühlflüssigkeit entlang einer Kühlschleife (135) zu leiten, sodass sich die Kühlflüssigkeit (129) in thermischem Kontakt mit der ersten Komponente (101) und der zweiten Komponente (105) befindet, zum Austauschen von thermischer Energie zwischen der ersten Komponente und der zweiten Komponente,
wobei die Anordnung dazu eingerichtet ist, in einer anderen Betriebsart die Kühlflüssigkeit entlang einer anderen Kühlschleife (141) zu leiten, sodass sich die Kühlflüssigkeit in thermischem Kontakt mit der zweiten Komponente (105) und dem Wärmetauscher (111, 112) befindet, zum Austauschen von thermischer Energie zwischen der zweiten Komponente und dem Wärmetauscher,
wobei die Anordnung dazu eingerichtet ist, in der anderen Betriebsart die Kühlflüssigkeit entlang einer weiteren anderen Kühlschleife (139) zu leiten, sodass sich die Kühlflüssigkeit in thermischem Kontakt mit der ersten Komponente (101) und dem Wärmetauscher (111, 112) befindet, zum Austauschen von thermischer Energie zwischen der ersten Komponente und dem Wärmetauscher.

2. Anordnung nach Anspruch 1, wobei in der einen Betriebsart die erste Komponente innerhalb der Kühlschleife entlang einer Strömungsrichtung (135) der Kühlflüssigkeit stromabwärts, insbesondere unmittelbar stromabwärts, der zweiten Komponente angeordnet ist.

3. Anordnung nach einem der vorhergehenden Ansprüche, wobei in der anderen Betriebsart die erste Komponente (101) und/oder die zweite Komponente (105) stromabwärts des Wärmetauschers entlang einer anderen Strömungsrichtung (139, 141) der Kühlflüssigkeit angeordnet sind/ist.

4. Anordnung nach einem der vorhergehenden Ansprüche, wobei eine dritte Komponente (149) innerhalb der Kühlschleife (135) und/oder der anderen Kühlschleife (141) und/oder der weiteren anderen Kühlschleife (139) angeordnet ist.

5. Anordnung nach einem der vorhergehenden Ansprüche, wobei das Rohrleitungssystem umfasst:
eine dritte Rohrleitung (121), welche die erste Komponente mit der zweiten Komponente verbindet,
wobei die Kühlschleife (135) die dritte Rohrleitung umfasst, wobei das Rohrleitungssystem insbesondere umfasst:
eine erste Rohrleitung (113), welche die erste Komponente mit dem Wärmetauscher verbindet;
eine zweite Rohrleitung (125), welche die zweite Komponente mit dem Wärmetauscher verbindet;
eine weitere erste Rohrleitung (115), welche die erste Komponente mit dem Wärmetauscher verbindet;
eine weitere zweite Rohrleitung (119), welche die zweite Komponente mit dem Wärmetauscher verbindet;
wobei die andere Kühlschleife (141) die zweite Rohrleitung (117) und/oder die weitere zweite Rohrleitung (119) umfasst, wobei die weitere andere Kühlschleife (139) die erste Rohrleitung (113) und/oder die weitere erste Rohrleitung (115) umfasst.

6. Anordnung nach Anspruch 5, wobei das Rohrleitungssystem ferner umfasst:
ein drittes Ventil (127) in der dritten Rohrleitung (121), wobei das Rohrleitungssystem insbesondere ferner umfasst:
ein erstes Ventil (123) in der ersten Rohrleitung (113) und/oder in der weiteren ersten Rohrleitung (115);
ein zweites Ventil (125) in der zweiten Rohrleitung (117) und/oder in der weiteren zweiten Rohrleitung (119).

7. Anordnung nach Anspruch 6, welche ferner umfasst:
ein Steuerungssystem (143), das dazu eingerichtet ist, in der anderen Betriebsart das erste Ventil (123) zu öffnen, das zweite Ventil (125) zu öffnen und das dritte Ventil (127) zu schließen, und
in der einen Betriebsart das erste Ventil (123) zu schließen, das zweite Ventil (125) zu schließen und das dritte Ventil (127) zu öffnen.

8. Anordnung nach Anspruch 7, wobei das Steuerungssystem (143) dazu eingerichtet ist, die eine Betriebsart zu wählen, wenn eine Windgeschwindigkeit unter einem Windgeschwindigkeits-Schwellenwert liegt und insbesondere wenn eine Temperatur der ersten Komponente über einem oberen Temperaturschwellenwert liegt.

9. Anordnung nach Anspruch 8, wobei das Steuerungssystem dazu eingerichtet ist, die andere Betriebsart zu wählen, wenn die Windgeschwindigkeit über dem Windgeschwindigkeits-Schwellenwert liegt.

10. Anordnung nach einem der vorhergehenden Ansprüche, welche ferner umfasst:
ein Heizelement (142), das sich in thermischem Kontakt mit der Kühlflüssigkeit in der anderen Kühlschleife und/oder in der Kühlschleife befindet,
wobei die Anordnung dazu eingerichtet ist zu bewirken, dass das Heizelement die Kühlflüssigkeit erwärmt, falls eine Temperatur der ersten Komponente unter einem unteren Temperaturschwellenwert liegt.

11. Anordnung nach einem der vorhergehenden Ansprüche, wobei die erste Komponente (101) eine niedrigere Wärmekapazität als die zweite Komponente (105) aufweist, wobei insbesondere die erste Komponente eine geringere Masse als die zweite Komponente aufweist, wobei insbesondere die zweite Komponente eine Masse zwischen 10.000 kg und 300.000 kg aufweist.

12. Anordnung nach einem der vorhergehenden Ansprüche, wobei die erste Komponente einen elektrischen Wandler (101) und/oder Hydrauliköl und/oder ein Lager umfasst und wobei insbesondere die zweite Komponente einen Generator (105) umfasst.

13. Windturbine (150), welche eine Anordnung (100) nach einem der vorhergehenden Ansprüche umfasst.

14. Windpark, welcher umfasst:
eine Windturbine nach Anspruch 13; und
eine Steuereinrichtung, welche dazu eingerichtet ist, einen Wärmeenergie erzeugenden Vorgang der ersten Komponente der Windturbine in Abhängigkeit von einer Temperatur der ersten Komponente der Windturbine zu reduzieren.

## Revendications

1. Agencement (100) pour refroidir un premier composant (101) d'une éolienne (150), l'agencement comprenant :
- un deuxième composant (105) de l'éolienne ;
- un système de tuyauteries (113, 115, 117, 119, 121) ;
- un échangeur de chaleur (111, 112) en contact thermique avec un environnement (114) ; et
- un liquide de refroidissement (129) transporté à l'intérieur du système de tuyauteries,
l'agencement étant, dans un mode de fonctionnement, adapté pour guider le liquide de refroidissement le long d'une boucle de refroidissement (135) de telle sorte que le liquide de refroidissement (129) soit en contact thermique avec le premier composant (101) et le deuxième composant (105) dans le but d'échanger de l'énergie thermique entre le premier composant et le deuxième composant, l'agencement étant, dans un autre mode de fonctionnement, adapté pour guider le liquide de refroidissement le long d'une autre boucle de refroidissement (141) de telle sorte que le liquide de refroidissement soit en contact thermique avec le deuxième composant (105) et l'échangeur de chaleur (111, 112) dans le but d'échanger de l'énergie thermique entre le deuxième composant et l'échangeur de chaleur, l'agencement étant, dans l'autre mode de fonctionnement, adapté pour guider le liquide de refroidissement le long d'une encore autre boucle de refroidissement (139), de telle sorte que le liquide de refroidissement soit en contact thermique avec le premier composant (101) et l'échangeur de chaleur (111, 112) dans le but d'échanger de l'énergie thermique entre le premier composant et l'échangeur de chaleur.

2. Agencement selon la revendication 1, dans lequel, dans le mode de fonctionnement, le premier composant est disposé à l'intérieur de la boucle de refroidissement, en aval, en particulier immédiatement en aval du deuxième composant, dans une direction d'écoulement (135) du liquide de refroidissement

3. Agencement selon l'une des revendications précédentes, dans lequel, dans l'autre mode de fonctionnement, le premier composant (101) et/ou le deuxième composant (105) sont disposés en aval de l'échangeur de chaleur dans une autre direction d'écoulement (139, 141) du liquide de refroidissement.

4. Agencement selon l'une des revendications précédentes, dans lequel un troisième composant (149) est disposé à l'intérieur de la boucle de refroidissement (135) et/ou de l'autre boucle de refroidissement (141) et/ou l'encore autre boucle de refroidissement (139).

5. Agencement selon l'une des revendications précédentes, dans lequel le système de tuyauteries comprend :
- un troisième tuyau (121) reliant le premier composant au deuxième composant,
dans lequel la boucle de refroidissement (135) comprend le troisième tuyau,
dans lequel le système de tuyauteries comprend en particulier :
- un premier tuyau 113 reliant le premier composant à l'échangeur de chaleur ;
- un deuxième tuyau (125) reliant le deuxième composant à l'échangeur de chaleur ;
- un autre premier tuyau (115) reliant le premier composant à l'échangeur de chaleur ;
- un autre deuxième tuyau (119) reliant le deuxième composant à l'échangeur de chaleur ;
dans lequel l'autre boucle de refroidissement (141) comprend le deuxième tuyau (117) et/ou l'autre deuxième tuyau (119),
dans lequel l'encore autre boucle de refroidissement (139) comprend le premier tuyau (113) et/ou l'autre premier tuyau (115).

6. Agencement selon la revendication 5, dans lequel le système de tuyauteries comprend en outre :
- une troisième vanne (127) dans le troisième tuyau (121),
dans lequel le système de tuyauteries comprend en outre en particulier :
- une première vanne (123) dans le premier tuyau (113) et/ou dans l'autre premier tuyau (115) ;
- une deuxième vanne (125) dans le deuxième tuyau (117) et/ou dans l'autre deuxième tuyau (119).

7. Agencement selon la revendication 6, comprenant en outre un système de régulation (143) adapté pour ouvrir la première vanne (123), pour ouvrir la deuxième vanne (125) et pour fermer la troisième vanne (127) dans l'autre mode de fonctionnement, et
pour fermer la première vanne (123), pour fermer la deuxième vanne (125) et pour ouvrir la troisième vanne (127) dans le mode de fonctionnement.

8. Agencement selon la revendication 7, dans lequel le système de régulation (143) est adapté pour adopter le mode de fonctionnement quand une vitesse du vent est inférieure à un seuil de vitesse du vent et en particulier quand une température du premier composant est supérieure à un seuil supérieur de température.

9. Agencement selon la revendication 8, dans lequel le système de régulation est adapté pour adopter l'autre mode de fonctionnement quand la vitesse du vent est supérieure au seuil de vitesse du vent.

10. Agencement selon l'une des revendications précédentes, comprenant en outre :
- un élément chauffant (142) en contact thermique avec le liquide de refroidissement dans l'autre boucle de refroidissement et/ou dans la boucle de refroidissement,
l'agencement étant adapté pour amener l'élément chauffant à chauffer le liquide de refroidissement si une température du premier composant est inférieure à un seuil inférieur de température.

11. Agencement selon l'une des revendications précédentes, dans lequel le premier composant (101) a une capacité calorifique inférieure à celle du deuxième composant (105), dans lequel en particulier le premier composant a une masse inférieure à celle du deuxième composant, dans lequel en particulier le deuxième composant a une masse comprise entre 10 000 kg et 300 000 kg.

12. Agencement selon l'une des revendications précédentes, dans lequel le premier composant comprend un convertisseur électrique (101), et/ou une huile hydraulique, et/ou un palier, et dans lequel en particulier le deuxième composant comprend un générateur (105).

13. Eolienne (105), comprenant un agencement (100) selon l'une des revendications précédentes.

14. Parc éolien, comprenant :
- une éolienne selon la revendication 13 ; et
- un régulateur qui est adapté pour réduire un fonctionnement générateur d'énergie thermique du premier composant de l'éolienne en fonction d'une température du premier composant de l'éolienne.
